# EUROPÄISCHE PATENTSCHRIFT

(11) **EP 1 308 451 B1**
(45) Veröffentlichungstag und Bekanntmachung des Hinweises auf die Patenterteilung: **19.01.2005**
(21) Anmeldenummer: 02022989.4
(22) Anmeldetag: 15.10.2002
(51) Int. Cl.: C07F 9/32, C08K 5/5377

(54) **Verfahren zur Herstellung von Carboxyethylmethylphosphinsäureglykolester**
Process for the preparation of carboxyethylmethyl phosphinic acid glycol ester
Procédé pour la préparation de glycol ester d'acide carboxyethylmethyl phosphinique

(30) Priorität: 02.11.2001 DE 10153780
(43) Veröffentlichungstag der Anmeldung: 07.05.2003
(73) Patentinhaber: Clariant GmbH, 65929 Frankfurt am Main (DE)
(72) Erfinder: Hörold, Sebastian, Dr., 50374 Erftstadt (DE); Breuer, Heinz-Peter, 50354 Hürth (DE); Jung, Elisabeth, 50181 Bedburg (DE)
(74) Vertreter: Mikulecky, Klaus

(56) Entgegenhaltungen:
- EP-A- 0 432 620
- EP-A- 0 969 008
- EP-A- 0 969 009

## Beschreibung

Die vorliegende Erfindung betrifft ein Verfahren zur Herstellung von Carboxyethylmethylphosphinsäureglykolester.

Carboxyethylmethylphosphinsäureglykolester stellen wertvolle Synthesebausteine bei der Herstellung schwerentflammbarer Polyesterfasem dar. So beschreibt die DE-A-39 40 713 die Herstellung schwerentflammbarer Synthesefasern, die in der Polymerkette Baugruppen der Formel (I) enthalten. Derartige schwerentflammbare Synthesefasern sind als Trevira CS im Handel erhältlich.

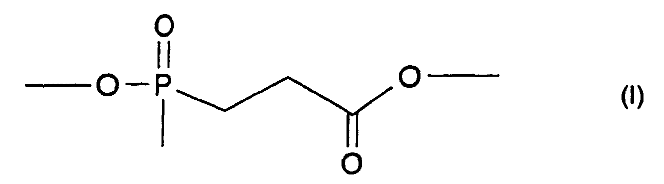

Die US 5,399,428 A1 und die DE 2 529 731 beschreiben flammwidrige lineare Polyester durch Einbau von carboxyfunktionellen Phosphinsäuren.

carboxylgruppenhaltige Phosphinsäuren werden erhalten, in dem man Phosphonigsäure-dihalogenide (Dihalogenphosphine) mit aktivierten olefinischen Verbindungen wie z.B. Acrylsäure- oder Methacrylsäurederivaten umsetzt und anschließend hydrolysiert (Houben-Weyl, Band 12/1, S. 230; K.K. Khairullin, T.I. Sobchuk, A.N. Pudovik, Zh. Obshch. Khim. 37, 710 (1967)). Als Nebenprodukte fallen bei der Hydrolyse mit organischen Säuren deren Halogenide an.

Carboxyethylmethylphosphinsäureglykolester kann wie in der US 4 062 888, Hoechst AG (1977) beschrieben durch Umsetzung von Methyldichlorphosphin mit Acrylsäure, anschließende Bildung des intramolekularen Anhydrids und Veresterung mit Ethylenglycol erhalten werden (Abbildung 1).

Das vorgenannte Methyldichlorphosphin, wird selbst bisher in einer aufwendigen Synthese aus Phosphortrichlorid und Methylchlorid in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig und/oder korrosiv, also höchst unerwünscht, sind.

Darüber hinaus können Phosphonigsäure-dihalogenide mit Alkylhalogeniden in Gegenwart von Aluminiumchlorid umgesetzt werden (Houben-Weyl, Band 12/1, S. 232).

Phosphinsäureester können auch aus Phosphonigsäuredialkylestem durch Michaelis-Arbuzov-Reaktion hergestellt werden. Phosphonigsäuredialkylestem wiederum werden aus Phosphonigsäuredihalogeniden und Hydroxyverbindungen hergestellt.

Die DE 25 40 283 A1 beschreibt die Herstellung von carboxylgruppenhaltigen organischen Phosphorverbindungen durch Addition von Phosphinen an α,β-ungesättigte Carbonsäuren in Gegenwart wässriger Salzsäure und anschließender Oxidation.

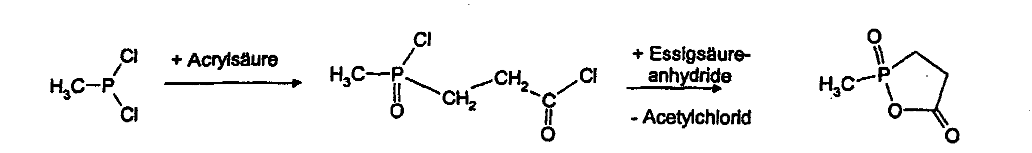

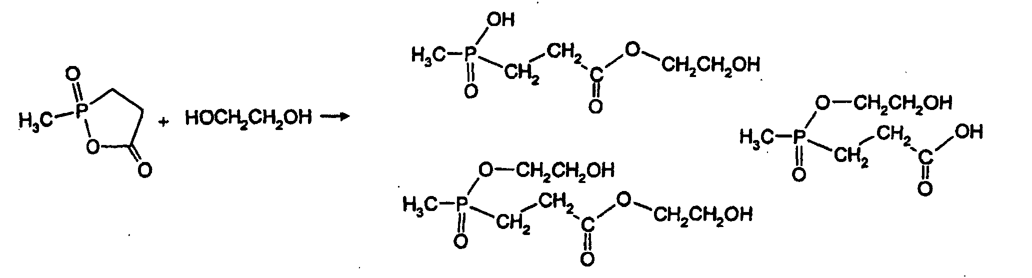

### Abbildung 1: Herstellung von Carboxyethylmethylphosphinsäureglykolester nach US 4 062 888 bzw. DE 2 529 731

Phosphinsäureester werden erhalten, wenn man Phosphonigsäuremonoester in Gegenwart peroxidischer Katalysatoren an 1-Olefine addiert. Die Ausbeuten sind aber nur gering. Die Addition von Phosphonigsäuremonoestern an aktivierte Doppelbindungen in Gegenwart von Alkoholaten als Katalysator verläuft besser. Als ungesättigte Verbindungen eignen sich α,β-ungesättigte Carbonsäureester oder - nitrile, α,β-ungesättigte Ketone sowie Alkyl-vinyl-sulfone und Essigsäurevinylester (Houben-Weyl, Band 12/1, S. 258-259).
Die Addition von Methanphosphonigsäurehydroxyethylester an Acrylsäurehydroxyethylester zum Herstellen von Carboxyethylmethylphosphinsäureglykolester war bereits aus der EP-A 0 969 008 bekannt. Das bekannte Verfahren ist jedoch für die Durchführung in produktionstechnischem Maßstab noch nicht optimal geeignet.

Die Phosphonigsäuremonoester selbst werden aus Phosphonigsäuredihalogeniden durch Umsetzung mit Alkoholen oder durch Hydrolyse und anschließende Veresterung hergestellt.

Es besteht daher ein Bedarf an Verfahren zur Herstellung von Carboxyethylmethylphosphinsäureglykolester, welches auf einfache Art und Weise durchführbar ist und bei dem einheitliche Produkte in hoher Ausbeute erhalten werden. Auch sollte ein solches Verfahren den bisher bekannten umwelttechnisch deutlich überlegen sein.

Der Erfindung liegt somit die Aufgabe zugrunde, ein Verfahren zur Herstellung von Carboxyethylmethylphosphinsäureglykolester zur Verfügung zu stellen, das die vorgenannten Nachteile vermeidet und von elementarem gelbem Phosphor als Edukt ausgeht.

Diese Aufgabe wird gelöst durch ein Verfahren der eingangs beschriebenen Art, dadurch gekennzeichnet, dass man
a) elementaren gelben Phosphor mit Methylchlorid in Gegenwart von Alkali- oder Erdalkalihydroxid zu einem Gemisch, welches als Hauptbestandteile die Alkali- und/oder Erdalkalisalze der methylphosphonigen, phosphorigen und hypophosphorigen Säure enthält, umsetzt
b) in dem nach a) erhaltenen Gemisch die methylphosphonige Säure verestert
c) den Ester der methylphosphonigen Säure aus dem Gemisch entfernt
d) den so erhaltenen Ester der methylphosphonigen Säure an einen Acrylsäureester oder Methacrylsäureester addiert
e) den so erhaltenen Diester hydrolysiert
f) die erhaltene Carboxyethylmethylphosphinsäure mit Ethylenglycol direkt zum Carboxyethylmethylphosphinsäureglykolester verestert.

Das erfindungsgemäße Verfahren weist gegenüber den bisher bekannten Verfahren erhebliche Vorteile auf, da es u.a. Phosphonigsäuredihalogenide als Edukte vermeidet und auch in der Produktverteilung eine positive Bilanz aufweist.

Bevorzugt wird die Reaktion im Schritt a) in einem Zwei-Phasen-System aus wässrigem Alkali- oder Erdalkalihydroxid oder Gemischen davon und einem organischen Lösungsmittel durchgeführt.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet.

Besonders bevorzugt wird als organisches Lösungsmittel Toluol, allein oder in Kombination mit Alkoholen, verwendet.

Bevorzugt wird die Reaktion (Schritt a) in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion (Schritt a) -20 bis +60°C.

Besonders bevorzugt beträgt die Temperatur 0 bis 30°C.

Bevorzugt wird die Reaktion (Schritt a) unter einem Druck von 0 bis 10 bar durchgeführt.

Bevorzugt wird das erfindungsgemäße Verfahren so ausgeführt, dass man den gelben Phosphor in einem Lösungsmittel oder einem Lösungsmittelgemisch suspendiert und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Methylchlorid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt wird im Schritt b) die methylphosphonige Säure mit einem linearen oder verzweigten Alkohol der allgemeinen Formel R-OH, wobei R für einen linearen oder verzweigten Alkylrest mit 1-10 Kohlenstoffatomen steht, direkt verestert. Besonders bevorzugt wird n-Butanol, Iso-Butanol oder Ethylhexanol verwendet.

Bevorzugt wird im Schritt c) der Ester der methylphosphonigen Säure destillativ entfernt.

Die Veresterung der phosphonigen Säure zum entsprechenden Monoester kann beispielsweise durch Umsetzung mit höhersiedenden Alkoholen unter Entfernung des gebildeten Wassers durch Azeotropdestillation erreicht werden.

Bevorzugt wird im Schritt d) in Anwesenheit von Katalysatoren addiert.

Bevorzugt handelt es sich dabei um basische Katalysatoren. Alternativ können auch Säuren oder kationische Radikalstarter eingesetzt werden.

Bevorzugt handelt es sich bei den basischen Katalysatoren um Alkali- und/oder Erdalkalialkoholate.

Bevorzugt handelt es sich bei dem Acrylsäureester der allgemeinen Formel (II) um einen Ester des gleichen Alkohol, wie er zur Veresterung der methylphosphonigen Säure in Schritt b) verwendet wurde.

Bevorzugt handelt es sich um Hydroxyethylacrylat, Acrylsäuremethylester, Acrylsäureethylester, Acrylsäurebutylester oder Acrylsäure-2-ethylhexylester.

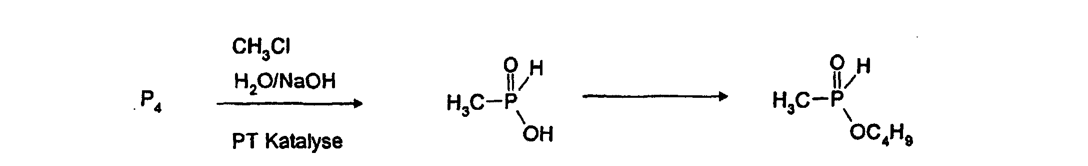

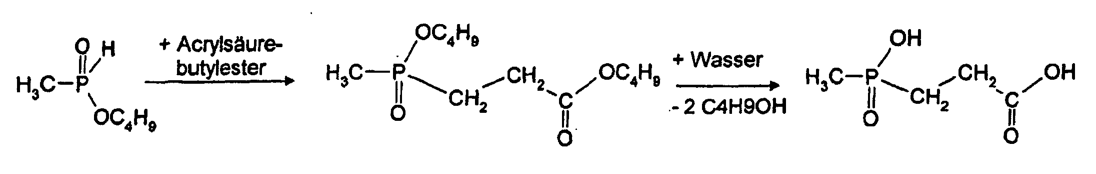

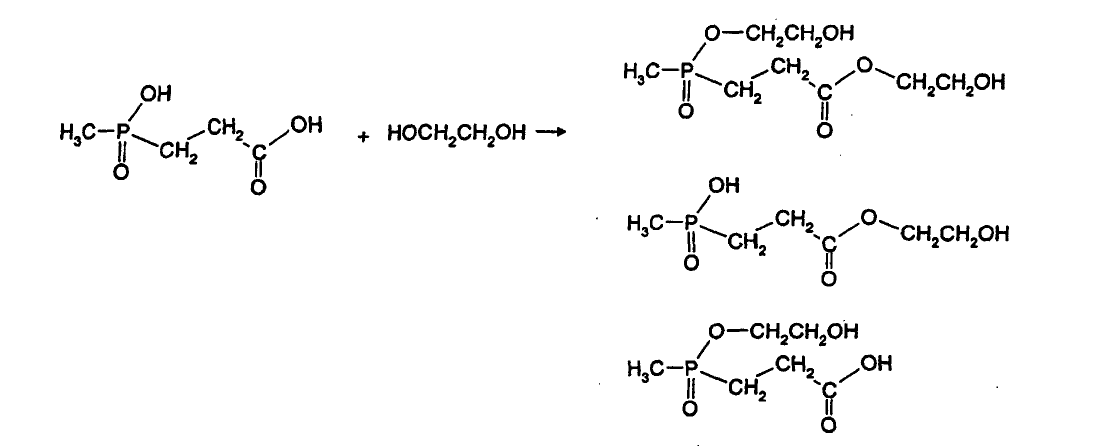

### Abbildung 2: Formelschema des erfindungsgemäßen Verfahrens zur Herstellung von Carboxyethylmethylphosphinsäureglykolestern

Die Erfindung wird durch die nachstehenden Beispiele erläutert:

### Beispiel 1: Umsetzung von gelbem Phosphor mit Methylchlorid

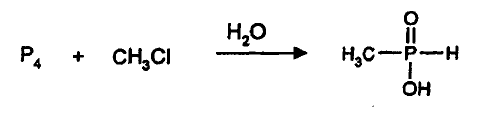

In einem 5 I Edelstahl-Druckreaktor wurde eine Lösung von 26,1 (0,05 Mol) Tributylhexadecylphosphoniumbromid in 1000 ml Toluol vorgelegt und auf 60°C vorgeheizt. Nach Zugabe von 62 g (2 Mol) gelbem Phosphor wurde unter intensivem Rühren auf-10°C abgekühlt und dann 202 g (4 Mol) Methylchlorid einkondensiert. Danach wurde innerhalb 2 Stunden 400 g 50 %ige wässrige Natronlauge zudosiert, wobei die Temperatur auf -10°C gehalten wurde. Innerhalb einer Stunde wurde 400 g Wasser zugegeben, danach eine weitere Stunde nachgerührt, auf Raumtemperatur erwärmt und anschließend der Reaktor über eine Verbrennung entspannt. Man erhielt zwei homogene flüssige Phasen, die getrennt und analysiert wurden.

Die wässrige Phase (Auswaage: 920 g) enthielt 65,6 Mol-% methylphosphonige Säure, 14,9 Mol-% Phosphorige Säure und 13,7 Mol-% hypophosphorige Säure und 2,8 Mol-% Dimethylphosphinsäure in Form ihrer Natriumsalze sowie 3 Mol-% Dimethyldiphosphin.

Phosphin-Oxidation/NaCl-Abtrennung: Die Lösung wurde sukzessive mit 60 g 5%iger wässriger Wasserstoffperoxidlösung, mit 240 g 36 %iger Salzsäure sowie mit 400 g 2-Ethylhexanol versetzt. Nach Abdestillation des enthaltenen Wassers am Wasserabscheider wurde das ausgefallene Natriumchlorid abfiltriert und mit 100 g 2-Ethylhexanol gewaschen.

### Beispiel 2: Veresterung von Methanphosphonigsäure im Reaktionsgemisch

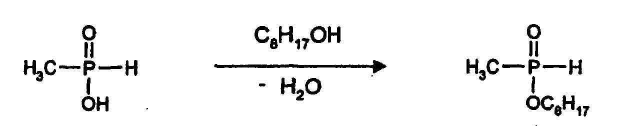

Die Ethylhexanol-Lösungen aus Beispiel 1 wurden vereinigt und unter leicht reduziertem Druck ca. 6 h am Wasserabscheider auf ca. 120°C erhitzt.

### Isolierung des Esters

Das veresterte Reaktionsgemisch wurde anschließend destillativ vom überschüssigen Ethylhexanol befreit und einer Vakuumdestillation unterzogen. Bei einem Druck von 0,3 mm und einer Kopf-Temperatur von 75°C gingen 220 g Methanphosphonigsäure-2-ethylhexylester über. Das Produkt fällt in Form einer klaren, farblosen Flüssigkeit in einer Reinheit von über 99 % an, entsprechend einer Ausbeute von 58 %, bezogen auf den eingesetzten gelben Phosphor. Analysen: 16,0 % Phosphor (Theorie: 16,2 %); ³¹P-NMR: Dublett bei 34 ppm (Diastereomerenpaar).

### Beispiel 3: Addition von Methanphosphonigsäure-n-Butylester an Acrylsäuren-butylester

In einem 500 ml Fünfhalskolben mit Thermometer, Rückflusskühler, Intensivrührer und Tropftrichter werden 136 g (1 mol) Methanphosphonigsäure-n-butylester und 128 g Acrylsäuren-butylester (1 mol) vorgelegt. Unter Rühren werden 5 ml Natriumbutylat (30 %) in einer solchen Geschwindigkeit dazugetropft, dass sich eine Reaktionstemperatur von max. 120°C einstellt. Anschließend wird noch 10 min bei 80°C nachreagieren lassen. Es wird eine schwach gelb gefärbte Flüssigkeit erhalten. ³¹P-NMR (CHCl₃): 56 ppm
Der so erhaltene Dibutylester wird bei 130°C und 0,5 mm Vakuum destilliert.

### Beispiel 4: Hydrolyse des Carboxyethylmethylphosphinsäuredibutylesters

528 g (2 mol) des nach Beispiel 4 erhaltenen Carboxyethylmethylphosphinsäuredibutylester werden in einem 1 I Fünfhalskolben mit Thermometer, Rückflusskühler, Intensivrührer und Tropftrichter vorgelegt. Bei 160°C wird während 4 h 500 ml Wasser eindosiert und eine Butanol-Wasser Mischung abdestilliert. Es werden 281 g Butanol erhalten entsprechend 95 % der Theorie. Das abdestillierte Butanol wird wieder zur Veresterung der methylphosphonigen Säure verwendet.
Es werden 300 g Carboxyethylmethylphosphinsäure als ein weißer Feststoff mit einem Schmelzpunkt von ca. 95°C und einer Reinheit nach ³¹P-NMR von > 97% erhalten.

### Beispiel 5: Veresterung von Carboxyethylmethylphosphinsäure mit Ethylenglycol

445,8 Carboxyethylmethylphosphinsäure (2,93 mol) nach Beispiel 5 werden bei 90°C in 356,4 g Ethylenglycol (5,86 mol) gelöst. Es wird eine klare, lagerstabile Lösung erhalten.

In einem 1 I Dreihalskolben mit Thermometer, Destillationsbrücke und Destillationskolonne sowie Intensivrührer wird bei 160°C das bei der Veresterung gebildete Wasser abgezogen. Es werden nach 2 h 54 g Destillat erhalten, bestehend zu 100 % aus Wasser. Die Wassermenge entspricht einer Diesterbildung von 52,4 % der Theorie. Der Phosphorgehalt des Produktes beträgt 12,4 % und enthält freies Ethylenglycol. Die Farbzahl (Hazen) beträgt 30, der Weißwert nach Berger 75 %, der gelbwert 5 %, die Verseifungszahl 420 mg KOH/g, der Wassergehalt (Karl-Fischer Titration) 0,1 %.
Das so erhaltene Produkt kann zur Herstellung schwerentflammbarer Polyesterfasern eingesetzt werden.

## Patentansprüche

1. Verfahren zur Herstellung von Carboxyethylmethylphosphinsäureglykolester, **dadurch gekennzeichnet, dass** man
a) elementaren gelben Phosphor mit Methylchlorid in Gegenwart von Alkali- oder Erdalkalihydroxid zu einem Gemisch, welches als Hauptbestandteile die Alkali- und/oder Erdalkalisalze der methylphosphonigen, Phosphorigen und hypophosphorigen Säure enthält, umsetzt
b) aus dem nach a) erhaltenen Gemisch die methylphosphonige Säure verestert
c) den Ester der methylphosphonigen Säure aus dem Gemisch entfernt
d) den so erhaltenen Ester der methylphosphonigen Säure an einen Acrylsäureester addiert
e) den so erhaltenen Diester hydrolysiert
f) die erhaltene Carboxyethylmethylphosphinsäure mit Ethylenglycol direkt zum Carboxyethylmethylphosphinsäureglykolester verestert.

2. Verfahren nach Anspruch 1, **dadurch gekennzeichnet, dass** man in einem organischem Lösungsmittel umsetzt.

3. Verfahren nach einem oder mehreren der Ansprüche 1 oder 2, **dadurch gekennzeichnet, dass** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet werden.

4. Verfahren nach einem oder mehreren der Ansprüche 1 bis 3, **dadurch gekennzeichnet, dass** als organisches Lösungsmittel Toluol, allein oder in Kombination mit Alkoholen, verwendet wird.

5. Verfahren nach einem oder mehreren der Ansprüche 1 bis 4, **dadurch gekennzeichnet, dass** die Reaktion in Anwesenheit eines Phasen-Transfer-Katalysators durchgeführt wird.

6. Verfahren nach Anspruch 5, **dadurch gekennzeichnet, dass** es sich bei dem Phasen-Transfer-Katalysator um Tetraalkylphosphoniumhalogenide, Triphenylalkylphosphoniumhalogenide oder Tetraorganylammoniumhalogenide handelt.

7. Verfahren nach einem oder mehreren der Ansprüche 1 bis 6, **dadurch gekennzeichnet, dass** die Temperatur bei der Reaktion -20 bis +60°C beträgt.

8. Verfahren nach einem oder mehreren der Ansprüche 1 bis 7, **dadurch gekennzeichnet, dass** die Temperatur 0 bis 30°C beträgt.

9. Verfahren nach einem oder mehreren der Ansprüche 1 bis 8, **dadurch gekennzeichnet, dass** die Reaktion unter einem Druck von 0 bis 10 bar durchgeführt wird.

10. Verfahren nach einem oder mehreren der Ansprüche 1 bis 9, **dadurch gekennzeichnet, dass** man den gelben Phosphor in einem Lösungsmittel oder einem Lösungsmittelgemisch suspendiert und dann mit einem Alkylhalogenid und einer Verbindung der Formel MOH oder M'(OH)₂ oder Gemischen davon, in denen M ein Alkalimetall und M' ein Erdalkalimetall bedeutet, umsetzt.

11. Verfahren nach einem oder mehreren der Ansprüche 1 bis 10, **dadurch gekennzeichnet, dass** der gelbe Phosphor und das Methylchlorid im molaren Verhältnis von 1:1 bis 1:3 miteinander umgesetzt werden, wobei das molare Verhältnis von gelbem Phosphor zur Verbindung der Formel MOH oder M'(OH)₂ 1:1 bis 1:5 beträgt.

12. Verfahren nach einem oder mehreren der Ansprüche 1 bis 11, **dadurch gekennzeichnet, dass** im Schritt b) die methylphosphonige Säure mit einem Alkohol im Gemisch verestert wird.

13. Verfahren nach einem oder mehreren der Ansprüche 1 bis 12, **dadurch gekennzeichnet, dass** man im Schritt c) den Methanphosphonigsäureester destillativ entfernt.

14. Verfahren nach einem oder mehreren der Ansprüche 1 bis 13, **dadurch gekennzeichnet, dass** im Schritt d) in Anwesenheit von Katalysatoren addiert.

15. Verfahren nach Anspruch 14, **dadurch gekennzeichnet, dass** es sich um basische Katalysatoren handelt.

16. Verfahren nach Anspruch 14 oder 15, **dadurch gekennzeichnet, dass** es sich bei den basischen Katalysatoren um Alkali- und/oder Erdalkalialkoholate handelt.

17. Verfahren nach einem oder mehreren der Ansprüche 1 bis 16, **dadurch gekennzeichnet, dass** es sich bei den Acrylsäurestem um Acrylsäuremethylester, Acrylsäurebutylester oder Acrylsäureethylhexylester handelt.

## Claims

1. A process of preparing glycol carboxyethylmethylphosphinate, which comprises
a) reacting elemental yellow phosphorus with methyl chloride in the presence of an alkali or alkaline earth metal hydroxide to form a mixture which includes the alkali and/or alkaline earth metal salts of methylphosphonous, phosphorous and hypophosphorous acids as main constituents,
b) esterifying the methylphosphonous acid from the mixture obtained by a),
c) removing the methylphosphonous ester from the mixture,
d) adding the thus obtained methylphosphonous ester onto an acrylic ester,
e) hydrolyzing the diester thus obtained,
f) esterifying the resulting carboxyethylmethylphosphinic acid with ethylene glycol directly to the glycol carboxyethylmethylphosphinate.

2. The process of claim 1, wherein the reaction is carried out in an organic solvent.

3. The process of one or more of claims 1 and 2, wherein the organic solvent used comprises straight-chain or branched alkanes, alkylsubstituted aromatic solvents, water-immiscible or only partly water-miscible alcohols or ethers used alone or combined with each other.

4. The process of one or more of claims 1 to 3, wherein the organic solvent used is toluene, alone or in combination with alcohols.

5. The process of one or more of claims 1 to 4, wherein the reaction is carried out in the presence of a phase transfer catalyst.

6. The process of claim 5, wherein the phase transfer catalyst comprises tetraalkylphosphonium halides, triphenylalkylphosphonium halides or tetraorganoammonium halides.

7. The process of one or more of claims 1 to 6, wherein the reaction temperature is in the range from -20 to +60°C.

8. The process of one or more of claims 1 to 7, wherein the temperature is in the range from 0 to 30°C.

9. The process of one or more of claims 1 to 8, wherein the reaction is carried out under a pressure in the range from 0 to 10 bar.

10. The process of one or more of claims 1 to 9, wherein the yellow phosphorus is suspended in a solvent or solvent mixture and then reacted with an alkyl halide and a compound of the formula MOH or M'(OH)₂ or mixtures thereof, where M is an alkali metal and M' is an alkaline earth metal.

11. The process of one or more of claims 1 to 10, wherein the yellow phosphorus and the methyl chloride are reacted with each other in a molar ratio in the range from 1:1 to 1:3, the molar ratio of yellow phosphorus to compound of the formula MOH or M'(OH)₂ being in the range from 1:1 to 1:5.

12. The process of one or more of claims 1 to 11, wherein step b) is effected by esterifying the methyl phosphonous acid with an alcohol in the mixture.

13. The process of one or more of claims 1 to 12, wherein step c) is effected by removing the methanephosphonous ester by distillation.

14. The process of one or more of claims 1 to 13, wherein the adding of step d) is effected in the presence of catalysts.

15. The process of claim 14, wherein the catalysts used are basic catalysts.

16. The process of claim 14 or 15, wherein the basic catalysts used are alkali and/or alkaline earth metal alkoxides.

17. The process of one or more of claims 1 to 16, wherein the acrylic ester is methyl acrylate, butyl acrylate or ethylhexyl acrylate.

## Revendications

1. Procédé de fabrication d'esters du glycol de l'acide carboxyéthylméthylphosphinique, **caractérisé en ce que**
a) on fait réagir du phosphore jaune élémentaire avec du chlorure de méthyle en présence de l'hydroxyde d'un métal alcalin ou alcalino-terreux, pour obtenir un mélange qui en tant que constituants principaux contient les sels d'un métal alcalin et/ou alcalino-terreux des acides méthylphosphoneux, phosphoreux et hypophosphoreux,
b) dans le mélange obtenu en a), on estérifie l'acide méthylphosphoneux,
c) on élimine du mélange l'ester de l'acide méthylphosphoneux,
d) on ajoute à un ester de l'acide acrylique ou méthacrylique l'ester ainsi obtenu de l'acide méthylphosphoneux,
e) on hydrolyse le diester ainsi obtenu,
f) on estérifie directement en l'ester du glycol de l'acide carboxyéthylméthylphosphinique, avec de l'éthylèneglycol, l'acide carboxyéthylméthylphosphinique obtenu.

2. Procédé selon la revendication 1, **caractérisé en ce qu'**on met en oeuvre la réaction dans un solvant organique.

3. Procédé selon l'une ou plusieurs des revendications 1 ou 2, **caractérisé en ce qu'**on utilise en tant que solvants organiques des alcanes à chaîne droite ou ramifiée, des solvants aromatiques à substitution alkyle, des alcools ou des éthers non miscibles ou partiellement miscibles à l'eau, seuls ou en combinaison les uns avec les autres.

4. Procédé selon l'une ou plusieurs des revendications 1 à 3, **caractérisé en ce qu'**on utilise en tant que solvant organique du toluène, seul ou en combinaison avec des alcools.

5. Procédé selon l'une ou plusieurs des revendications 1 à 4, **caractérisé en ce que** la réaction est mise en oeuvre en présence d'un catalyseur de transfert de phase.

6. Procédé selon la revendication 5, **caractérisé en ce que**, pour ce qui concerne le catalyseur de transfert de phase, il s'agit d'halogénures de tétraalkylphosphonium, d'halogénures de triphénylalkylphosphonium ou d'halogénures de tétraorganylammonium.

7. Procédé selon l'une ou plusieurs des revendications 1 à 6, **caractérisé en ce que** la température lors de la réaction est de -20 à +60°C.

8. Procédé selon l'une ou plusieurs des revendications 1 à 7, **caractérisé en ce que** la température est de 0 à 30°C.

9. Procédé selon l'une ou plusieurs des revendications 1 à 8, **caractérisé en ce que** la réaction est mise en oeuvre sous une pression de 0 à 10 bar.

10. Procédé selon l'une ou plusieurs des revendications 1 à 9, **caractérisé en ce qu'**on met le phosphore jaune en suspension dans un solvant ou dans un mélange de solvants, puis on le fait réagir avec un halogénure d'alkyle ou un composé de formule MOH ou M'(OH)₂ ou des mélanges de ceux-ci, où M est un métal alcalin et M' est un métal alcalino-terreux.

11. Procédé selon l'une ou plusieurs des revendications 1 à 10, **caractérisé en ce que** le phosphore jaune et le chlorure de méthyle sont mis à réagir l'un avec l'autre selon un rapport en moles de 1:1 à 1:3, le rapport en moles du phosphore jaune au composé de formule MOH ou M'(OH)2 étant de 1:1 à 1:5.

12. Procédé selon l'une ou plusieurs des revendications 1 à 11, **caractérisé en ce que**, dans l'étape b), l'acide méthylphosphoneux est estérifié en mélange avec un alcool.

13. Procédé selon l'une ou plusieurs des revendications 1 à 12, **caractérisé en ce qu'**on élimine l'ester de l'acide méthanephosphoneux par distillation dans l'étape c).

14. Procédé selon l'une ou plusieurs des revendications 1 à 13, **caractérisé en ce que**, dans l'étape d), on procède à l'addition en présence de catalyseurs.

15. Procédé selon la revendication 14, **caractérisé en ce qu'**il s'agit de catalyseurs basiques.

16. Procédé selon la revendication 14 ou 15, **caractérisé en ce que**, pour ce qui concerne les catalyseurs basiques, il s'agit d'alcoolates de,métaux alcalins et/ou alcalino-terreux.

17. Procédé selon l'une ou plusieurs des revendications 1 à 16, **caractérisé en ce que**, pour ce qui concerne les acrylates, il s'agit de l'acrylate de méthyle, de l'acrylate de butyle ou de l'acrylate d'éthylhexyle.
